**Europäisches Patentamt**

**European Patent Office**

**Office européen des brevets**

(19)

(11) Veröffentlichungsnummer : **0 365 049 B1**

(12)

# EUROPÄISCHE PATENTSCHRIFT

(45) Veröffentlichungstag der Patentschrift :
**13.05.92 Patentblatt 92/20**

(51) Int. Cl.$^5$ : **A01B 49/06**

(21) Anmeldenummer : **89122299.4**

(22) Anmeldetag : **17.07.86**

(54) **Kombinierte Gerätekombination.**

(30) Priorität : **21.09.85 DE 3533820**

(43) Veröffentlichungstag der Anmeldung :
**25.04.90 Patentblatt 90/17**

(45) Bekanntmachung des Hinweises auf die
Patenterteilung :
**13.05.92 Patentblatt 92/20**

(84) Benannte Vertragsstaaten :
**DE FR GB NL**

(56) Entgegenhaltungen :
**EP-A- 0 091 878**
**DE-A- 3 032 275**
**DE-U- 8 512 299**
**US-A- 3 339 643**
**US-A- 4 432 292**

(60) Veröffentlichungsnummer der früheren
Anmeldung nach Art. 76 EPü : **0 216 050**

(73) Patentinhaber : **Amazonen-Werke H. Dreyer
GmbH & Co. KG
Am Amazonenwerk 9-13
W-4507 Hasbergen-Gaste (DE)**

(72) Erfinder : **Gattermann, Bernd
Eichenwall 3
W-2872 Hude i.O: (DE)**
Erfinder : **Gehrke, Rudolf
Lerchenweg 1
W-2990 Papenburg 1 (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine kombinierte Gerätekombination gemäß des Oberbegriffes des Patentanspruches 1.

Eine derartige Gerätekombination ist durch die US-PS 33 39 643 bekannt. Diese Gerätekombination weist ein vorlaufendes Bodenbearbeitungsgerät und eine aus nebeneinander auf einem Tragrohr angeordneten Reifen bestehende Nachlaufwalze auf. Es ist in dieser Druckschrift erwähnt, daß eine Sämaschine auf die Gerätekombination aufgesetzt sein kann. Wie das Saatgut in den Boden eingebracht wird, ist dieser Schrift nicht zu entnehmen.

Der Erfindung liegt die Aufgabe zugrunde, eine kompakte Gerätekombination für die Saatbettbereitung und das gleichzeitige Einsäen zu schaffen.

Diese Aufgabe wird erfingungsgemäß durch die Maßnahmen des Kennzeichens des Anspruches 1 gelöst.

Infolge dieser Maßnahme ist es möglich, in einem Arbeitsgang sowohl den Boden zu lockern und zu krümeln bzw, zu verfestigen, was durch die Bodenbearbeitungskombination geschieht, und in diesem Arbeitsgang gleichzeitig das Saatgut sofort in dem durch die Bodenbearbeitungskombination geschaffenen Saatbett abzulegen. Darüberhinaus läßt diese Maschine sich sehr leicht am Feldende wenden, weil durch den hydraulischen Hubrahmen sich die Sämaschine in eine kompakte Stellung nach vorn und oben bewegen läßt. Dadurch daß die Sämaschine sich höhenverstellbar auf der Nachlaufwalze abstützt, kann die jeweils optimale Ablagetiefe des Saatgutes durch die Säschare sowie die Arbeitstiefe der Bodenbearbeitungsmaschine auf die jeweiligen Bodenverhältnisse und das jeweilige Saatgut richtig und optimal eingestellt werden.

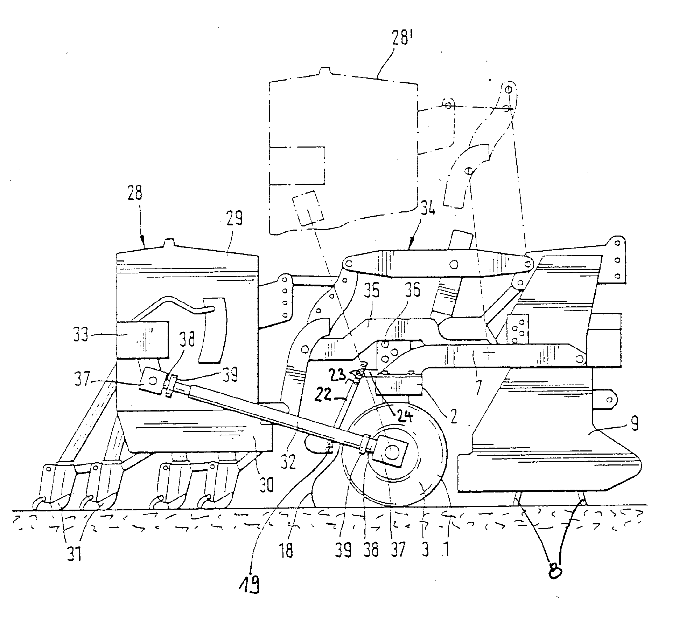

Weitere Einzelheiten der Erfindung sind der Beispielsbeschreibung und der Zeichnung zu entnehmen, Hierbei zeigt die Zeichnung
die erfindungsgemäße Gerätekombination in der Seitenansicht.

Die als Nachlaufwalze 1 ausgebildete Bodenwalze weist den Tragrahmen 2 und die nebeneinander in einer quer sich zur Fahrtrichtung erstreckenden Reihe nebeneinander angeordneten luftbereiften Reifen 3 auf. Der Tragrahmen 2 ist oberhalb der Reifen 3 angeordnet. Die Reifen 3 sind Niederdruckreifen, die sich vorzugsweise durch starke Walkarbeit selbst reinigen. Der Luftdruck in den Niederdruckreifen beträgt 0,3 bis 0,5 bar. Die Bodenwalze 1 ist über die Tragarme 7 hinter den Bodenbearbeitungswerkzeugen 8 der als Kreiselegge 9 ausgebildeten Bodenbearbeitungsmaschine angeordnet. Die Bodenwalze 1 und die Kreiselegge 9 bilden zusammen mit der Sämaschine 28 die kombinierte Gerätekombination. Diese Gerätekombination ist über die Dreipunktkupplungselemente, die sich auf der Vorderseite der Kreiselegge 9 befinden, an den Dreipunktkraftheber eines nicht dargestellten Schleppers anzuschließen.

Die Bodenwalze 1 bestimmt die Eindringtiefe der Bodenbearbeitungswerkzeuge 8 der Kreiselegge 9 in den Boden, da sich die Kreiselegge 9 über die einstellbaren Anschläge 11 über die Tragarme 7 auf der Bodenwalze 1 abstützt.

Die Bodenwalze 1 besteht aus den jeweils mit einem Abstand nebeneinander angeordneten luftbereiften Reifen 3.

Hinter der Bodenwalze 1 sind in dem Bereich der Zwischenräume zwischen den Reifen 3 jeweils die Striegelzinken 18 angeordnet. Die Striegelzinken 18 sind an dem Querbalken 19 befestigt, der mittels Streben an der Nachlaufwalze 1 angelenkt ist. Des weiteren sind an den Querbalken 19 noch die Einstellstreben 22 angeordnet. Diese Einstellstreben 22 weisen auf ihrer Oberseite mehrere übereinander angeordnete Löcher 23 auf. Des weiteren ist an dem Tragrahmen 2 die Einstellplatte 24 angeordnet, die einen Bolzen aufweist, so daß die jeweilige Einstellstrebe 22 über die Löcher 23 auf diesen Bolzen eingehängt werden kann. Somit kann der Querbalken 19 derart in der Höhe verstellt werden, so daß die Striegelzinken 18 zentral in der Höhe bzw. in ihrer Eingriffstiefe in den Boden eingestellt werden können.

Im folgenden soll die Funktion der erfindungsgemäßen Gerätekombination, insbesondere die Funktionsweise der Bodenwalze 1 näher erläutert werden:
Durch die Gerätekombination, die aus der Kreiselegge 9 und der aus den Reifen 3 zusammengesetzten Bodenwalze 1 besteht, soll in einem Arbeitsgang der Boden durch die Kreiselegge 9 gekrümelt und durch die Bodenwalze 1 rückverfestigt werden, so daß ein Saatbett mit einer optimalen Krümelstruktur, entsteht. Die Bodenbearbeitungswerkzeuge 8 der Kreiselegge 9 zerschlagen die groben Kluten und erzeugen eine Krümelstruktur wenn die Kreiselegge 9 soweit abgesenkt wird, daß die Bodenbearbeitungswerkzeuge 8 in den Boden eindringen. Durch die Reifen 3 der Bodenwalze 1 wird der Boden, der von den Bodenbearbeitungswerkzeugen 8 der Kreiselegge 9 gelockert worden ist, wieder rückverfestigt. Direkt in der Spur der Reifen 3 wird der Boden in der obersten Bodenschicht stärker angedrückt als in den Zwischenräumen zwischen den Reifen 3, so daß in den Zwischenräumen ein Erdwall unverfestigter bzw. lockerer krümliger Boden etwas erhöht gegenüber der Laufradspur der Reifen 3 zurückbleibt. Diese Erde des Erdwalles wird durch die Striegelzinken 18 seitlich verteilt bzw. zur Seite in die Laufradspuren der Reifen 3 geworfen, so daß die Laufradspur der Reifen 3 mit einer

2

EP 0 365 049 B1

krümeligen Bodenschicht bedeckt wird. Hierdurch entsteht ein optimales Saatbett.

Die von den Laufrädern 3 durch das Andrücken des Bodens verfestigte Bodenschicht gebildet einen verdichteten Horizont, der gleichzeitig Saatablagehorizont ist, so daß das Saatgut, wie von den Ackerbauern gefordert, auf einer etwas angedrückten Erdschicht abgelegt wird, so daß das Saatgut Anschluß an die wasserführende Schicht des Bodens erhält. Abgedeckt wird das auf diesem verdichteten Horizont abgelegte Saatgut durch eine Schicht lockeren Boden, der im wesentlichen durch das Verteilen der Erde des Erdwalles zwischen den Reifen 3 durch die Striegelzinken 18 erzeugt worden ist.

Die Gerätekombination weist weiterhin die hinter der Bodenwalze 1 angeordnete Sämaschine 28 auf. Die Sämaschine 28 weist den Vorratsbehälter 29 und den laufradlosen Rahmen 30 auf. An dem Rahmen 30 sind die Säschare 31 in aufrechter Ebene schwenkbar angeordnet, Weiterhin weist die Sämaschine 28 die nicht dargestellten Dosierorgane, die vor dem unteren Bereich des Vorratsbehälters 29 angeordnet sind, auf. Die Dosierorgane werden von den Reifen 3 der Bodenwalze 1 über das Schiebeprofilrohr 32 und über das Regelgetriebe 33 angetrieben.

Die Sämaschine 28 ist mittels des hydraulischen Hubrahmens 34 hinter der Nachlaufwalze angeordnet. Die Unterlenker 35 stützen sich in Sästellung der Sämaschine 28 auf den höhenverstellbaren Anschlägen 36, die auf dem Tragrahmen 2 der Bodenwalze 1 angeordnet sind, ab. Über den hydraulischen Hubrahmen 34 kann die Sämaschine in die mit strichpunktierten Linien angedeutete Stellung 28' zum Wenden am Feldende angehoben werden.

Zum Antrieb des Regelgetriebes 33 über das Schiebeprofilrohr 32 ist jeweils ein Winkelgetriebe 37, wovon je eines auf der Wellenachse der Reifen 3 und der Antriebswelle des Regelgetriebes 33 schwenkbar angeordnet ist. Weiterhin ist jeweils zwischen dem Schiebeprofilrohr 32 und den Wellen 38 jeweils die elastische Kupplung 39 angeordnet, die kleine Fluchtfehler der Wellen 38 der Winkelgetriebe 37 ausgleicht.

Durch die Gerätekombination kann also in einem Arbeitsgang der Boden durch die Kreiselegge 9 gelockert und durch die Reifen 3 der Bodenwalze angedrückt werden, so daß ein optimales Saatbett entsteht und gleichzeitig über die Säschare 31 der Sämaschine 28 das Saatgut im Boden abgelegt werden.

## Patentansprüche

1. Gerätekombination bestehend aus einer Bodenbearbeitungsmaschine (9), einer hinter der Bodenbearbeitungsmaschine (9) angeordneten Nachlaufwalze (1), die die Eindringtiefe der Bodenbearbeitungswerkzeuge der Bodenbearbeitungsmaschine (9) in den Boden bestimmt und auf der sich das Gewicht der Bodenbearbeitungsmaschine (9) während des Bodenbearbeitungsvorganges abstützt, wobei die Nachlaufwalze (1) Reifen (3) aufweist, und einer Sämaschine (28), dadurch gekennzeichnet, daß die Sämaschine (28) Säschare (31) aufweist, die hinter der Nachlaufwalze (1) angeordnet sind, daß die laufradlose Sämaschine (28) mittels eines hydraulischen Hubrahmens (34) hinter der Bodenbearbeitungsmaschine angeordnet ist, daß der Hubrahmen (34) Unterlenker (35) aufweist, welche sich in Sästellung der Sämaschine (28) auf höhenverstellbaren Anschlägen (36) abstützen, und daß mittels des hydraulischen Hubrahmens (34) die Sämaschine (28) zum Wenden am Felde in eine nach vorn-oben versetzte Position (28') oberhalb der Nachlaufwalze (1) verschwenkbar ist.

2. Gerätekombination nach Anspruch 1, dadurch gekennzeichnet, daß die Dosierorgane der Sämaschine (28) über eine Welle (32) von den Reifen (3) der Nachlaufwalze (1) angetrieben werden.

3. Gerätekombination nach Anspruch 1, dadurch gekennzeichnet daß die Winkelgetriebe (37) der Welle (32) schwenkbar auf der Wellenachse der Reifen (3) bzw. an der Sämaschine (28) schwenkbar angeordnet sind, und daß jeweils zwischen der Welle (32) und den Wellen der Winkelgetriebe (37) eine elastische Kupplung (39) angeordnet ist.

## Claims

1. Combination machine, including a ground cultivating machine (9), a follower roller (1) disposed behind the ground cultivating machine (9), which follower roller determines the depth to which the ground cultivating tools of the ground cultivating machine (9) penetrate the ground, and which follower roller supports the weight of the ground cultivating machine (9) during the ground cultivating operation, the follower roller (1) having tyres (3), and a seed drill (28), characterised in that the seed drill (28) includes sowing coulters (31), which are disposed behind the follower roller (1), in that the seed drill (28), which is without running wheels, is disposed behind the ground cultivating machine by means of a hydraulic lifting frame (34), in that the lifting frame (34) includes lower guide means (35), which are supported on vertically adjustable stop members (36) when the seed drill (28) is in its sowing position, and in that the seed drill (28) is pivotable, by means of the hydraulic lifting frame (34), into an upwardly and forwardly displaced position (28') above the follower roller (1) to facilitate turning in a field.

2. Combination machine according to claim 1, characterised in that metering members of the seed drill (28) are driven by the tyres (3) of the follower roller (1) via a shaft (32).

3. Combination machine according to claim 1, characterised in that mitre gears (37) of the shaft (32) are pivotably disposed on the shaft axis of the tyres (3), or respectively on the seed drill (28), and in that a resilient coupling (39) is disposed between the shaft (32) and each respective shaft of the mitre gears (37).

## Revendications

1. Machine combinée comprenant une machine pour le travail du sol (9) suivie par un rouleau suiveur (1) qui définit la profondeur de pénétration des outils de travail du sol de la machine (9) dans le sol, le poids de la machine (9) s'appuyant sur le rouleau pendant le travail du sol, le rouleau suiveur (1) comportant des pneumatiques (3), ainsi qu'un semoir (28), machine caractérisée en ce que le semoir (28) comporte des socs (31) prévus derrière le rouleau suiveur (1) et le semoir (28) sans roues de sustentation est monté derrière la machine pour le travail du sol par l'intermédiaire d'un châssis de levage hydraulique (34), le châssis (34) ayant des bras inférieurs (35) qui, lorsque le semoir (28) est en position de travail, s'appuient sur des butées (36) réglables en hauteur et en ce qu'à l'aide du châssis de levage hydraulique (34) on peut basculer le semoir (28) pour se retourner à l'extrémité du champ, dans une position (28') décalée vers le haut et vers l'avant, au-dessus du rouleau suiveur (1).

2. Machine combinée selon la revendication 1, caractérisée en ce que les organes de dosage du semoir (28) sont entraînés à partir des pneumatiques (3) du rouleau suiveur (1) par l'intermédiaire d'un axe (32).

3. Machine combinée selon la revendication 1, caractérisée en ce que les renvois d'angle (37) de l'axe (32) sont montés pivotants sur l'axe des pneumatiques (3) ou sur le semoir (28) et en ce que chaque fois entre l'axe (32) et les axes des renvois d'angle (37) un accouplement élastique (39) est prévu.